# EUROPEAN PATENT APPLICATION

(11) **EP 4 664 226 A1**
(43) Date of publication of application: **17.12.2025**
(21) Application number: 24854297.9
(22) Date of filing: 26.06.2024
(51) Int. Cl.: G05D 1/246, G05D 1/628, G05D 1/648, G05D 1/644, G05D 1/43, A47L 9/28, G05D 105/10

(54) **ROBOT CLEANER AND CLEANING METHOD THEREFOR**

(30) Priority: 14.08.2023 KR 20230106202
(71) Applicant: Samsung Electronics Co., Ltd., Suwon-si, Gyeonggi-do 16677 (KR)
(72) Inventor: KIM, Woojeong, Suwon-si Gyeonggi-do 16677 (KR); GIM, Haeyeon, Suwon-si Gyeonggi-do 16677 (KR); KIM, Hyomuk, Suwon-si Gyeonggi-do 16677 (KR); OH, Keunchan, Suwon-si Gyeonggi-do 16677 (KR)
(74) Representative: Gulde & Partner
(86) International application number: PCT/KR2024/008887
(87) International publication number: WO 2025/037744

(57) **Abstract**

A robot cleaner is disclosed. The robot cleaner comprises: a sensor; a driving unit; an input interface; a memory in which a map of the space in which the robot cleaner is located is stored; and one or more processors for controlling the driving unit such that the robot cleaner cleans on the basis of the map if a user input for setting the mode of the robot cleaner to a first mode is received through the input interface, identifying a travel path for moving an obstacle located at a first position to a second position on the basis of the shape of the obstacle and the position of a cleaned area on the map if it is identified that the obstacle sensed by the sensor while the robot cleaner cleans is a target obstacle, and controlling the driving unit such that the robot cleaner cleans at the first position after moving the obstacle to the second position along the travel path.

## Description

### [Technical Field]

The present disclosure relates to a robot cleaner and a cleaning method therefor, and more particularly, to a robot cleaner that moves within a space and performs a cleaning operation, and a cleaning method therefor.

### [Background Art]

Robots may refer to various types of machines that have the ability to perform work functions independently. In detail, beyond simple repetitive functions, robots may detect their surrounding environment in real time by using sensors, cameras, or the like, collect information, and travel autonomously.

Such robots are currently being used in various fields. In homes, robot cleaners are widely used.

In this case, the robot cleaner may detect the location and distance of the obstacle by using a sensor included in the robot cleaner, determine the movement speed, direction, or the like of the robot cleaner based on a detection result, and travel accordingly. In addition, the robot cleaner may perform a cleaning operation by suctioning foreign materials while moving.

If an obstacle is present in a space to be cleaned, the robot cleaner may fail to properly perform the cleaning on the space occupied by the obstacle. In addition, due to the difficulty in cleaning the space occupied by the obstacle, there has been a demand for a method to increase a coverage rate of the robot cleaner.

### [Disclosure of Invention]

### [Solution to Problem]

According to an embodiment of the present disclosure, provided is a robot cleaner including: a sensor; a driving unit; an input interface; a memory storing a map of a space in which the robot cleaner is disposed; and at least one processor. The at least one processor may be configured to control the driving unit to cause the robot cleaner to perform a cleaning operation based on the map if a user input for setting a mode of the robot cleaner to a first mode is received through the input interface. The at least one processor may be configured to identify a travel path for moving an obstacle from a first location to a second location based on a shape of the obstacle and a location of a cleaned region on the map if it is identified that the obstacle detected by the sensor while the robot cleaner performs the cleaning operation is a target obstacle. The at least one processor may be configured to control the driving unit to cause the robot cleaner to perform the cleaning operation on the first location after moving the obstacle to the second location along the travel path.

The at least one processor may be configured to identify the detected obstacle as the target obstacle if it is identified that the detected obstacle is a floor obstacle, is an object capable of being in contact with the robot cleaner, and is an object capable of being pushed by the robot cleaner based on sensing data obtained from the sensor.

The at least one processor may be configured to identify whether the detected obstacle is an obstacle present on the map based on the sensing data obtained from the sensor, and identify whether the detected obstacle is the floor obstacle based on a type of the detected obstacle if it is identified that the detected obstacle is an obstacle that is not present on the map.

The at least one processor may be configured to identify an attribute of the detected obstacle based on the sensing data obtained from the sensor, and identify whether the detected obstacle is the object capable of being in contact with the robot cleaner and is the object capable of being pushed by the robot cleaner based on the identified attribute.

The at least one processor may be configured to identify the shape of the obstacle based on the sensing data obtained from the sensor if it is identified that the obstacle is the target obstacle, identify a contact portion of the obstacle based on the shape of the obstacle, and identify the travel path for moving the obstacle from the first location to the second location based on a location of the contact portion and the location of the cleaned region on the map. The contact portion may be a portion of the obstacle that the robot cleaner comes into contact with to push and move the obstacle.

The at least one processor may be configured to identify a plane on the obstacle based on the shape of the obstacle, and identify the plane as the contact portion.

The at least one processor may be configured to control the driving unit to cause the robot cleaner to move the obstacle from the second location to the first location if the cleaning operation on the first location is completed.

The at least one processor may be configured to control the driving unit to cause the robot cleaner to move within the space based on the map if a user input for setting the mode of the robot cleaner to a second mode is received through the input interface, identify a region corresponding to the obstacle from a plurality of regions included in the map based on a type of the obstacle if it is identified that the obstacle detected by the sensor while the robot cleaner moves is the target obstacle, and control the driving unit to cause the robot cleaner to move the obstacle to the region based on a location of the region.

The at least one processor may be configured to control the driving unit to cause the robot cleaner to perform the cleaning operation if a user input for the cleaning operation is received through the input interface after the obstacle is moved to the region.

The at least one processor may be configured to control the driving unit to cause the robot cleaner to perform the cleaning operation on an entire region on the map based on the map if a user input for cleaning the entire region is received through the input interface after the obstacle is moved to the region, and control the driving unit to cause the robot cleaner to perform the cleaning operation on a region in which the obstacle used to be disposed based on the map if a user input for cleaning the region in which the obstacle used to be disposed is received after the obstacle is moved to the region.

According to an embodiment of the present disclosure, provided is a cleaning method for a robot cleaner which includes a sensor, the method including: performing a cleaning operation based on a map if a user input for setting a mode of the robot cleaner to a first mode is received; identifying a travel path for moving an obstacle from a first location to a second location based on a shape of the obstacle and a location of a cleaned region on the map if it is identified that the obstacle detected by the sensor while the cleaning operation is performed by the robot cleaner is a target obstacle; and performing the cleaning operation on the first location after the obstacle is moved to the second location along the travel path.

According to an embodiment of the present disclosure, provided is a non-transitory computer-readable medium storing computer instructions that cause the robot cleaner to perform an operation if executed by at least one processor of a robot cleaner including a sensor, wherein the operation includes performing a cleaning operation based on a map if a user input for setting a mode of the robot cleaner to a first mode is received, identifying a travel path for moving an obstacle from a first location to a second location based on a shape of the obstacle and a location of a cleaned region on the map if it is identified that the obstacle detected by the sensor while the cleaning operation is performed by the robot cleaner is a target obstacle, and performing the cleaning operation on the first location after the obstacle is moved to the second location along the travel path.

### [Brief Description of Drawings]

FIG. 1 is a diagram for describing a robot cleaner according to an embodiment of the present disclosure;
FIG. 2A is a block diagram for describing components included in the robot cleaner according to an embodiment of the present disclosure;
FIG. 2B is a block diagram for describing components included in the robot cleaner according to an embodiment of the present disclosure;
FIG. 3, FIG. 4A, FIG. 4B, FIG. 4C, FIG. 4D, FIG. 4E, FIG. 4F, and FIG. 4G are diagrams for describing operations of the robot cleaner in a first mode according to an embodiment of the present disclosure;
FIG. 5 is a diagram for describing a method for the robot cleaner to identify whether an obstacle is a target obstacle according to an embodiment of the present disclosure;
FIG. 6, FIG. 7A, and FIG. 7B are diagrams for describing operations of the robot cleaner in a second mode according to an embodiment of the present disclosure; and
FIG. 8 is a flowchart describing a cleaning method for a robot cleaner according to an embodiment of the present disclosure.

### [Mode for Invention]

It should be understood that various embodiments of the present disclosure and terms used herein are not intended to limit technical features described in the present disclosure to specific embodiments, and rather are intended to include various modifications, equivalents, and substitutions of the corresponding embodiments.

Throughout the accompanying drawings, similar components are denoted by similar reference numerals.

A singular noun corresponding to an item is intended to include one or more of the items unless a relevant context clearly indicates otherwise.

In the present disclosure, an expression such as "A or B", "at least one of A and B", "at least one of A or B", "A, B, or C", "at least one of A, B, and C", "at least one of A, B, or C", or the like may include any one of the items listed together or all possible combinations thereof. For example, "A or B", "at least one of A and B", or "at least one of A or B" may indicate all of 1) a case in which at least one A is included, 2) a case in which at least one B is included, or 3) a case in which both of at least one A and at least one B are included.

Terms such as "first", "second", or the like may be used simply to distinguish one element and another element from each other, and do not limit the corresponding components in any other respect (e.g., importance or order).

If a component (for example, a first component) is mentioned to be "coupled with/to" or "connected to" another component (for example, a second component) with or without terms "operatively or communicatively", it should be understood that the component may be coupled to another component directly (e.g., in a wired manner), in a wireless manner, or through a third component.

It should be further understood that terms "include", "have" or the like, used in the specification specify the presence of features, numerals, steps, operations, components, parts mentioned in the specification or combinations thereof, and do not preclude the presence or addition of one or more other features, numerals, steps, operations, components, parts, or combinations thereof.

If a component is referred to as being "connected", "coupled", "supported", or "in contact" with another component, it includes not only a case where the components are directly connected, coupled, supported, or in contact with each other, but also a case where the components are indirectly connected, coupled, supported, or in contact with each other through a third component.

If a component is referred to be disposed "on" another component, it includes not only a case where the component is in contact with another component, but also a case where still another component is interposed between the two components.

A term "and/or" includes a combination of a plurality of related items or any one of the plurality of related items.

Instead, the expression "a device configured to", in any context, may indicate that the device may "perform~" together with another device or component. For example, a "processor configured (or set) to perform A, B, and C" may indicate a dedicated processor (for example, an embedded processor) that may perform the corresponding operations or a generic-purpose processor (for example, a central processing unit (CPU) or an application processor) that may perform the corresponding operations by executing one or more software programs stored in a memory device.

In the embodiments, a "module" or a "part" may perform at least one function or operation, and be implemented by hardware or software or be implemented by a combination of hardware and software. In addition, a plurality of "modules" or a plurality of "parts" may be integrated in at least one module and be implemented by at least one processor (not shown) except for a "module" or a "part" that needs to be implemented by specific hardware.

Meanwhile, the various elements and areas in the drawings are schematically shown. Therefore, the spirit of the present disclosure is not limited by relative sizes or intervals shown in the accompanying drawings.

A neural network model according to the present disclosure refers to an artificial intelligence model that includes a neural network, and may be trained by deep learning. The neural network model may be a type such as an object recognition model. However, the neural network model according to the present disclosure is not limited to the examples described above.

In addition, a type of neural network included in the neural network model according to the present disclosure is not limited to a specific type. That is, the neural network model according to the present disclosure may include various types of neural networks such as a deep neural network (DNN), a convolutional neural network (CNN), a recurrent neural network (RNN), and a generative adversarial network (GAN). In addition, the neural network model according to the present disclosure may be implemented as an on-device included in a robot cleaner 100, and may also be included in an external device connected to the robot cleaner 100.

In the present disclosure, a type of an obstacle may indicate not only the type of the object, but also what specific object it is.

Hereinafter, an embodiment of the present disclosure is described in detail with reference to the accompanying drawings.

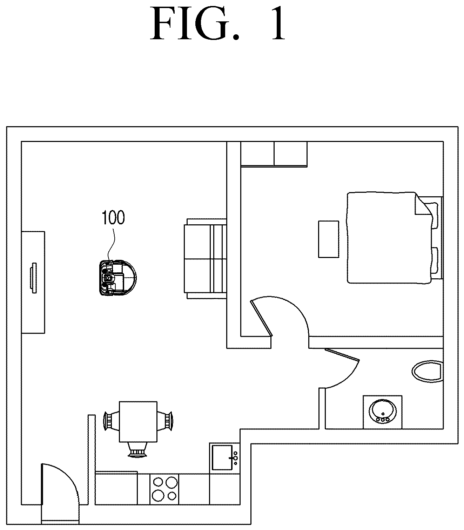

FIG. 1 is a diagram for describing a robot cleaner according to an embodiment of the present disclosure.

Referring to FIG. 1, the robot cleaner 100 may clean a space in which the robot cleaner 100 is disposed.

The space may include any of various indoor spaces where the robot cleaner 100 may travel, such as a home, an office, a hotel, a factory, a store, a mart, and a restaurant.

A cleaning operation may include suctioning foreign materials such as dust that are present on a floor as the robot cleaner 100 moves within the space.

The robot cleaner 100 may include a sensor. The robot cleaner 100 may generate a map (e.g., map data) of the space in which the robot cleaner 100 is disposed based on sensing data obtained by the sensor. For example, the robot cleaner 100 may generate a map of the space by using the sensing data and various mapping algorithms, and store the generated map in a memory of the robot cleaner 100. The map may be a two-dimensional (2D) map or a three-dimensional (3D) map. The map may include information about the location, size, shape, or the like of a plurality of sub-spaces (e.g., rooms) included in the space, and may include information about the location, size, shape, or the like of the obstacle (e.g., furniture or home appliances) included in the space.

The robot cleaner 100 may identify a travel path based on the map, and identify a location of the robot cleaner 100 in the map based on the sensing data obtained by the sensor while the robot cleaner 100 moves along the travel path. For example, the robot cleaner 100 may generate the map by using a simultaneous localization and mapping (SLAM) method, and identify the location of the robot cleaner 100. In addition, the robot cleaner 100 may detect the obstacle based on the sensing data obtained by the sensor and move while avoiding the obstacle.

Meanwhile, a shape of the robot cleaner 100 shown in FIG. 1 is an example. For example, the robot cleaner 100 may have any of various shapes such as a cylindrical shape, a rectangular parallelepiped shape, and a cube shape.

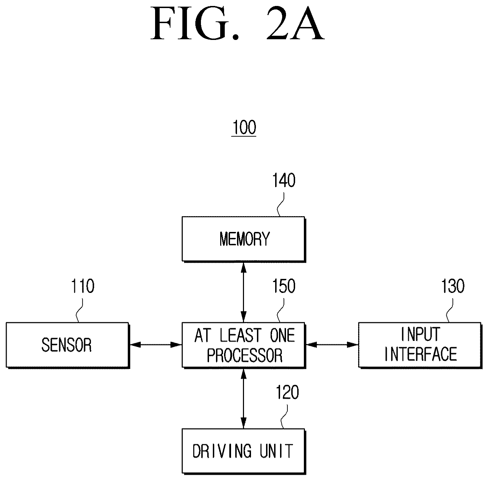

FIG. 2A is a block diagram for describing components included in the robot cleaner according to an embodiment of the present disclosure.

Referring to FIG. 2A, the robot cleaner 100 may include a sensor 110, a driving unit 120, an input interface 130, a memory 140, and at least one processor 150.

The sensor 110 may obtain sensing data by detecting a state or the like of the robot cleaner 100 or a surrounding environment of the robot cleaner 100.

For example, the sensor 110 may include at least one of an inertial measurement unit (IMU) sensor, a light detection and ranging (LiDAR) sensor, an infrared sensor, an ultrasonic sensor, a camera, a pressure sensor, or a wheel encoder.

The IMU sensor may detect the acceleration, angular velocity, or the like of the robot cleaner 100 by using at least one of an accelerometer sensor, a gyroscope sensor, or a magnetometer sensor.

The LiDAR sensor, the infrared sensor, or the ultrasonic sensor may detect the surrounding environment of the robot cleaner 100 by outputting light (e.g., laser, infrared, or ultrasound) and measuring a time required for the output light to be reflected from the obstacle around the robot cleaner 100 and return to the robot cleaner 100. For example, the LiDAR sensor, the infrared sensor, or the ultrasonic sensor may obtain, as the sensing data, a distance between the robot cleaner 100 and the obstacle, a direction in which the obstacle is disposed, the size, shape, or the like of the obstacle. At least one processor 150 may generate the map of the space in which the robot cleaner 100 is disposed based on the sensing data. At least one processor 150 may store the generated map in the memory 140.

The camera may detect the surrounding environment of the robot cleaner 100 by capturing surroundings around the robot cleaner 100. The camera may be implemented as a red-green-blue (RGB) camera, a three-dimensional (3D) camera, or the like. For example, the camera may obtain the sensing data by capturing the surroundings around the robot cleaner 100. The sensing data may include an image capturing an obstacle present around the robot cleaner 100. At least one processor 150 may analyze the image to obtain information about the distance between the robot cleaner 100 and the obstacle, the direction in which the obstacle is disposed, the size, shape, or the like of the obstacle. In addition, at least one processor 150 may generate the map of the space in which the robot cleaner 100 is disposed based on the obtained information. At least one processor 150 may store the generated map in the memory 140.

The obstacle may include objects. The objects may include objects disposed at fixed locations, such as walls, furniture (e.g., tables, chairs, beds, or wardrobes), or home appliances, and objects capable of moving independently, such as people or pets.

The pressure sensor may detect pressure applied to the robot cleaner 100. For example, the pressure sensor may be disposed on a front portion of the robot cleaner 100. At least one processor 150 may identify whether the obstacle is in contact with the robot cleaner 100 based on a pressure value obtained from the pressure sensor. For example, if a pressure greater than or equal to a threshold value is detected from the pressure sensor, at least one processor 150 may identify that the obstacle is in contact with the robot cleaner 100.

The wheel encoder may detect the rotational speed and rotational direction of each of a plurality of wheels included in the robot cleaner 100. The plurality of wheels may function to move the robot cleaner 100 by being rotated by a motor. At least one processor 150 may identify a moving distance of the robot cleaner 100 based on information about the rotational speed and rotational direction obtained from the wheel encoder.

Meanwhile, the sensor 110 is not limited to the above-described example, and the robot cleaner 100 may include various sensors.

The driving unit 120 may move the robot cleaner 100. For example, the driving unit 120 may include the plurality of wheels, the plurality of motors for driving the wheels, brakes for stopping the rotating wheels, or the like. At least one processor 150 may control the driving unit 110 to perform various traveling operations, such as the movement, stop, speed control, direction change, and angular velocity change, or the like of the robot cleaner 100.

The driving unit 120 may drive a cleaning device (e.g., a cleaning tool) to cause the robot cleaner 100 to suction the foreign materials. The cleaning device may generate a suction force to suction the foreign materials such as dust present on the floor. The driving unit 120 may drive the cleaning device to suction the foreign materials from the floor. The suctioned foreign materials may be accommodated in a dust bin disposed in the robot cleaner 100.

At least one processor 150 may control the driving unit 120 to cause the robot cleaner 100 to perform the cleaning operation. For example, at least one processor 150 may control the driving unit 120 to cause the robot cleaner 100 to move and suction the foreign materials present on the floor while moving. In addition, at least one processor 150 may control the driving unit 120 to cause the robot cleaner 100 to push and move the obstacle.

The input interface 130 may include circuitry. The input interface 130 may receive a user input and transmit the user input to at least one processor 150. For example, the input interface 130 may receive various user inputs for setting or selecting various functions supported by the robot cleaner 130.

The input interface 130 may include various types of input devices.

For example, the input interface 130 may include a physical button. The physical button may include a function key, a directional key, or a dial button. The physical button may be implemented as a plurality of keys. Alternatively, the physical button may be implemented as a single key. If the physical button is implemented as a single key and the user input in which the key is pressed for a threshold time or longer is received, at least one processor 150 may perform a function corresponding to the user input.

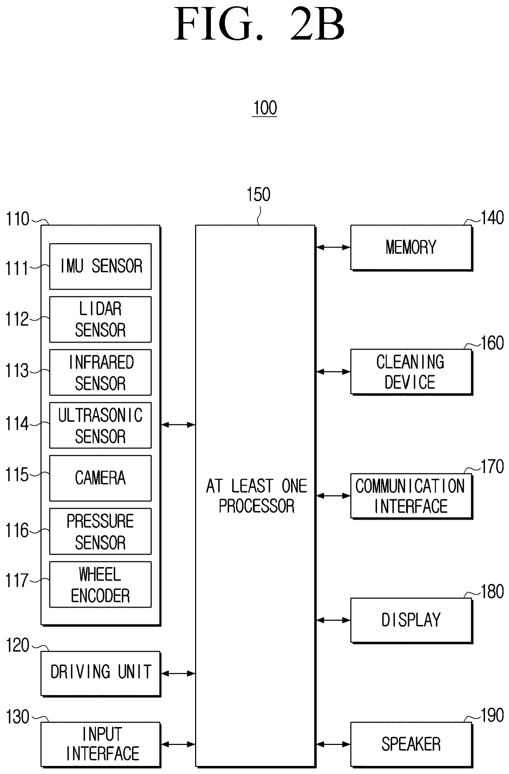

For example, the input interface 130 may receive the user input by using a touch method. The input interface 130 may include a touch sensor. In addition, the input interface 130 may be implemented as a touchscreen capable of performing a function of a display (e.g., a display180 shown in FIG. 2B).

For example, the input interface 130 may receive the user input from the external device. The external device may include a remote control device (e.g., a remote controller) for controlling the robot cleaner 100 or a user mobile device (e.g., a smartphone or a wearable device). The mobile device may store an application for controlling the robot cleaner 100. The mobile device may receive the user input through the application and transmit the user input to the robot cleaner 100. The mobile device may directly transmit the user input to the robot cleaner 100 or transmit the user input to the robot cleaner 100 through a server.

For example, the input interface 130 may receive a user voice through a microphone. At least one processor 150 may perform a function corresponding to the user voice based on voice recognition. For example, the input interface 130 may convert the user voice into text data by using a speech-to-text (STT) function, obtain control command data based on the text data, and perform the function corresponding to the user voice based on the control command data. According to an embodiment, the server may perform the STT function.

The memory 140 may store data necessary for the robot cleaner 100 to operate according to various embodiments of the present disclosure. For example, the memory 140 may store the map of the space in which the robot cleaner 100 is disposed.

The map may include a plurality of regions. For example, at least one processor 150 may identify a region surrounded by a wall based on the sensing data, and identify an obstacle (e.g., a door frame, a window, a fence, or a staircase) to distinguish one region from another region, and segment the map into the plurality of regions. The region may correspond to the sub-space (e.g., a room) included in the space. The map may include information about the location, size, shape, or the like of an obstacle (e.g., a wall, furniture, or a home appliance) disposed in each region.

The memory 140 may be implemented as a memory embedded in the robot cleaner 100 (e.g., a volatile memory, a non-volatile memory, a hard drive, or a solid state drive) based on a purpose of data storage, or may be implemented as a memory detachable from the robot cleaner 100 (e.g., a memory card or an external memory).

The memory 140 may store at least one instruction. At least one processor 150 may perform operations of the robot cleaner 100 according to the various embodiments of the present disclosure by executing at least one instruction stored in the memory 140. The memory 140 may store programs, applications, and data for driving the robot cleaner 100.

At least one processor 150 may control overall operations of the robot cleaner 100. At least one processor 150 may be connected to components included in the robot cleaner 100 and control the overall operations of the robot cleaner 100. For example, at least one processor 150 may be connected to the sensor 110, the driving unit 120, the input interface 130, and the memory 140 to control the robot cleaner 100. At least one processor 150 may include one or more processors.

At least one processor 150 may perform the operations of the robot cleaner 100 according to the various embodiments of the present disclosure by executing at least one instruction stored in the memory of the robot cleaner 100.

At least one processor 150 may include at least one of a central processing unit (CPU), a graphic processing unit (GPU), an accelerated processing unit (APU), a many integrated core (MIC), a digital signal processor (DSP), a neural processing unit (NPU), a hardware accelerator, or a machine learning accelerator. At least one processor 150 may control one or any combination of other components included in the robot cleaner 100, and may perform an operation related to communication or data processing. At least one processor 150 may execute at least one program or instruction stored in the memory 140. For example, at least one processor 150 may perform a method according to an embodiment of the present disclosure by executing at least one instruction stored in the memory 140.

If the method according to an embodiment of the present disclosure includes a plurality of operations, the plurality of operations may be performed by a single processor, or may be performed by the plurality of processors. For example, if a first operation, a second operation, and a third operation are performed by the method according to an embodiment, the first operation, the second operation, and the third operation may all be performed by a first processor, or the first operation and the second operation may be performed by the first processor (e.g., a general-purpose processor) and the third operation may be performed by a second processor (e.g., an artificial intelligence-only processor).

At least one processor 150 may be implemented as a single-core processor including a single core, or may be implemented as at least one multi-core processor including a plurality of cores (e.g., homogeneous multiple cores or heterogeneous multiple cores). If at least one processor 150 is implemented as the multi-core processor, each of the multiple cores included in the multi-core processor may include a processor internal memory such as a cache memory or an on-chip memory, and a common cache shared by the multiple cores may be included in the multi-core processor. In addition, each (or some) of the multiple cores included in the multi-core processor may independently read and perform a program instruction for implementing the method according to an embodiment of the present disclosure, or all (or some) of the multiple cores may be linked with each other to read and perform the program instruction for implementing the method according to an embodiment of the present disclosure.

If the method according to an embodiment of the present disclosure includes the plurality of operations, the plurality of operations may be performed by one of the multiple cores included in the multi-core processor, or may be performed by the multiple cores. For example, if the first operation, the second operation, and the third operation are performed by the method according to an embodiment, the first operation, the second operation, and the third operation may all be performed by a first core included in the multi-core processor, or the first operation and the second operation may be performed by the first core included in the multi-core processor and the third operation may be performed by a second core included in the multi-core processor.

In the embodiments of the present disclosure, the processor may refer to a system on a chip (SoC) that integrates at least one processor and other electronic components, the single-core processor, the multi-core processor, or a core included in the single-core processor or the multi-core processor. Here, the core may be implemented as a CPU, a GPU, an APU, an MIC, a DSP, an NPU, a hardware accelerator, or a machine learning accelerator, or the like, and the embodiments of the present disclosure are not limited thereto.

Meanwhile, for convenience of description, at least one processor 150 may be referred to as the processor 150 hereinafter.

FIG. 2B is a block diagram for describing components included in the robot cleaner according to an embodiment of the present disclosure.

Referring to FIG. 2B, the robot cleaner 100 may include the sensor 110, the driving unit 120, the input interface 130, the memory 140, at least one processor 150, a cleaning device 160, a communication interface 170, the display 180, and a speaker 190. However, such components are exemplary, and a new component may be added or some components may be omitted upon implementing the present disclosure. Meanwhile, among the components shown in FIG. 2B, a detailed description of a component that overlaps with a component shown in FIG. 2A may be omitted.

The sensor 110 may include an inertial measurement unit (IMU) sensor 111, a LiDAR sensor 112, an infrared sensor 113, an ultrasonic sensor 114, a camera 115, a pressure sensor 116, or a wheel encoder 117.

The cleaning device 160 may suction the foreign materials from the floor. For example, the cleaning device 160 may include the cleaning tool (e.g., a brush) that is rotatably installed to collect the foreign materials and the motor for generating the suction force, or the like. The processor 150 may control the driving unit 120 to drive the cleaning device 160. Accordingly, the cleaning device 160 may suction the foreign materials from the floor by using the suction force.

The communication interface 170 may communicate with the external device such as the server, the mobile device, or the like through a surrounding access point (AP). The access point (AP) may connect a local area network (LAN) to which the robot cleaner 100 or the mobile device is connected to a wide area network (WAN) to which the server is connected. The robot cleaner 100 may be connected to the server through the wide area network (WAN).

The communication interface 170 may transmit and receive data to and from the external device. The communication interface 160 may include a wireless communication module or a wired communication module. The communication module may be implemented by using at least one hardware chip.

The wireless communication module may be a module that communicates with the external device in a wireless manner. For example, the wireless communication module may include at least one of a wireless fidelity (Wi-Fi) module, a Bluetooth module, or an infrared communication module. However, the wireless communication module is not limited to such examples, and may include a communication module for performing the communication according to various wireless communication standards, such as long term evolution (LTE), LTE advanced (LTE-A), fourth generation (4G), and fifth generation (5G).

The wired communication module may be a module for performing the communication with the external device in a wired manner. For example, the wired communication module may include at least one of a local area network (LAN) module, or an Ethernet module.

The communication interface 170 may communicate with the external device without passing through a connection repeater. For example, the communication interface 170 may include at least one of a high definition multimedia interface (HDMI), a universal serial bus (USB), a USB C-type, or a DisplayPort (DP).

The display 180 may display various information. For example, the display 181 may be implemented as a liquid crystal display (LCD) or the like. The display180 may also be implemented as a touchscreen. The processor 150 may display information related to the operation of the robot cleaner 100 on the display180.

The speaker 190 may output audio. The processor 150 may output various notification sounds or voice guidance messages related to the operation of the robot cleaner 100 through the speaker 190.

Although not shown in FIG. 2B, the robot cleaner 100 may include a battery. The battery may be disposed inside a main body of the robot cleaner 100 and supply power to the components included in the robot cleaner 100. For example, the battery may include a rechargeable secondary battery.

The processor 150 may control the driving unit 120 to cause the robot cleaner 100 to perform the cleaning operation if the user input for the cleaning operation is received through the input interface 130. For example, the processor 150 may control the driving unit 120 to cause the robot cleaner 100 to move within the space based on the map. In addition, the processor 150 may control the driving unit 120 to cause the robot cleaner 100 to move while avoiding the obstacle based on the sensing data obtained from the sensor 110 while the robot cleaner 100 moves. In addition, the processor 150 may control the driving unit 120 to cause the robot cleaner 100 to suction the foreign materials present on the floor by using the cleaning device 160 while the robot cleaner 100 moves.

In this way, the robot cleaner 100 may perform a general cleaning operation. In addition to a cleaning mode, the robot cleaner 100 according to the present disclosure may perform a function corresponding to one of a plurality of modes. The plurality of modes may include a first mode and a second mode. Hereinafter, the operation performed by the robot cleaner 100 in the first mode or the second mode may be described in more detail.

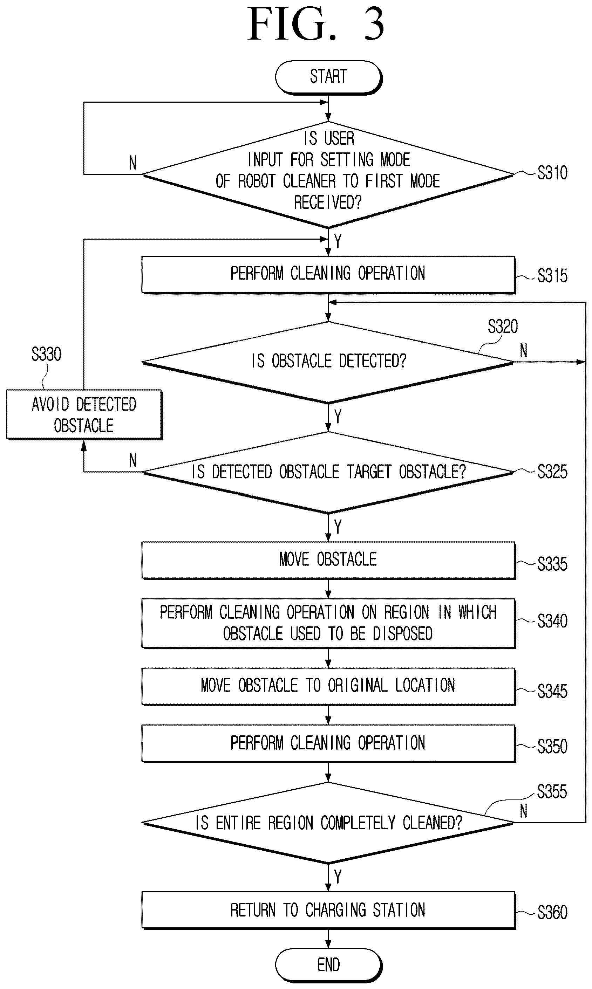

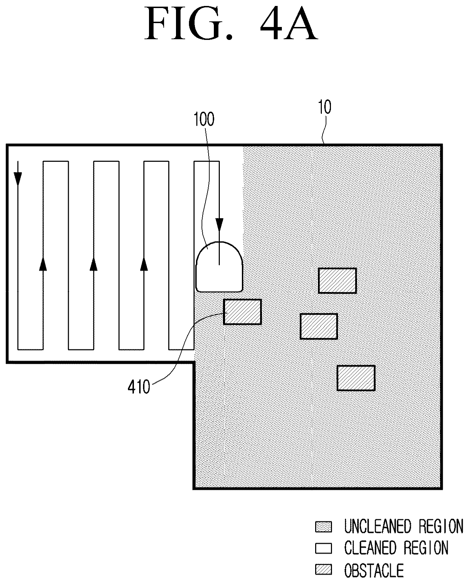

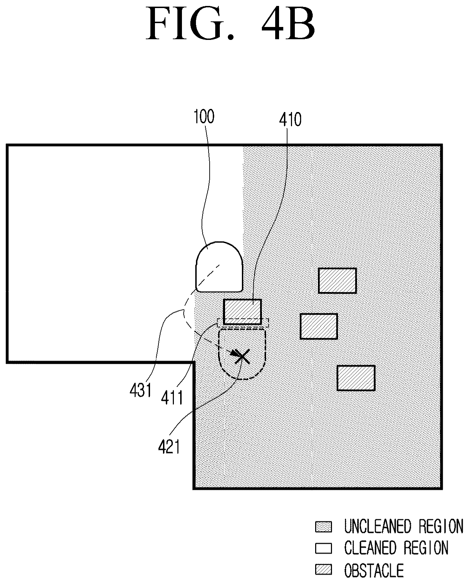

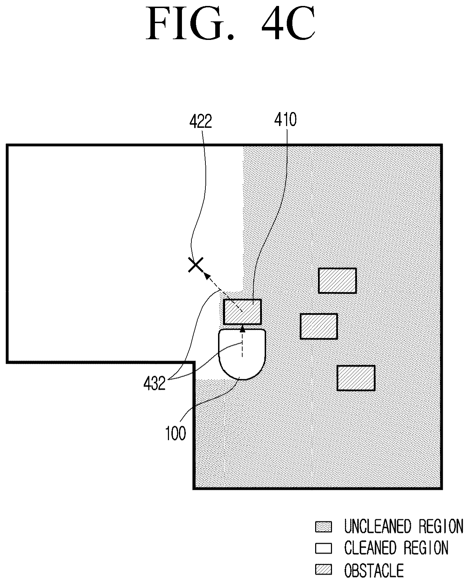

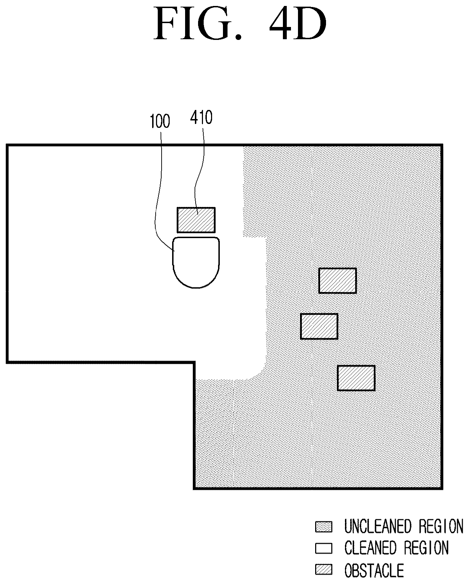

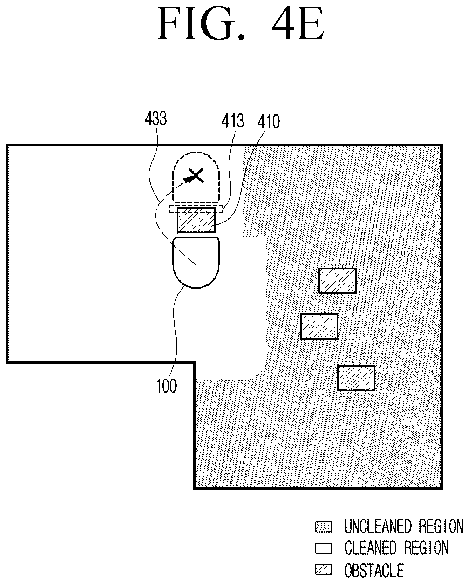

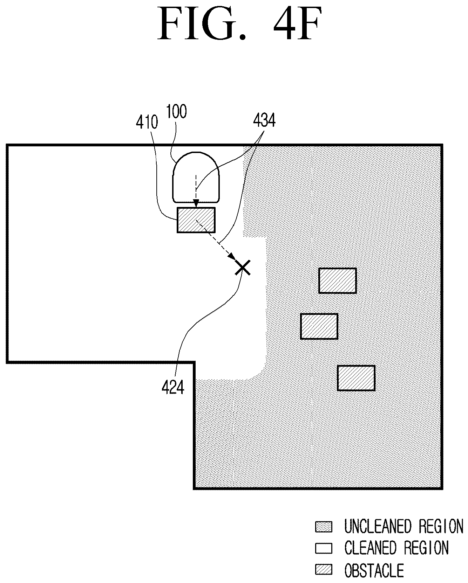

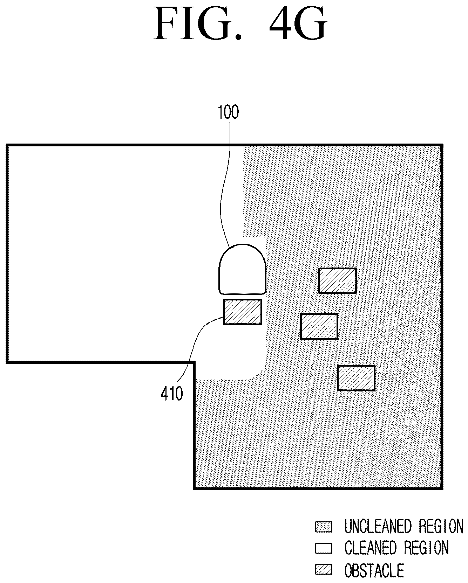

FIG. 3, FIG. 4A, FIG. 4B, FIG. 4C, FIG. 4D, FIG. 4E, FIG. 4F, and FIG. 4G are diagrams for describing the operation of the robot cleaner in the first mode according to an embodiment of the present disclosure.

Referring to FIG. 3, the processor 150 may control the driving unit 120 to cause the robot cleaner 100 to perform the cleaning operation based on the map (S315) if a user input for setting the mode of the robot cleaner 100 to the first mode is received through the input interface 130 (S310).

The first mode may refer to a mode in which the robot cleaner 100 performs the cleaning operation, and pushes away the obstacle in the space while also cleaning a region where the obstacles is used to be disposed (e.g., a cleaning while pushing away mode) while performing the cleaning operation.

For example, the processor 150 may control the driving unit 120 to cause the robot cleaner 100 to move within the space based on the map if the user input for setting the mode of the robot cleaner 100 to the first mode is received. In addition, the processor 150 may control the driving unit 120 to suction the foreign materials present on the floor by using the cleaning device 160 while the robot cleaner 100 moves.

The processor 150 may detect the obstacle based on the sensing data obtained from the sensor 110 while the robot cleaner 100 performs the cleaning operation (S320). For example, the processor 150 may detect the obstacle around the robot cleaner 100 based on the sensing data obtained from at least one of the LiDAR sensor 112, the infrared sensor 113, or the ultrasonic sensor 114. In addition, the processor 150 may detect the obstacle around the robot cleaner 100 by capturing the surroundings around the robot cleaner 100 by using the camera 115 to obtain an image, and analyzing the obtained image.

The processor 150 may identify whether the detected obstacle is a target obstacle (S325) if the obstacle is detected (S320-Y).

For example, referring to FIG. 4A, the robot cleaner 100 may perform cleaning while moving within a map 10. Accordingly, a region to which the robot cleaner 100 moves (e.g., a cleaned region) may be completely cleaned. Meanwhile, the processor 150 may identify whether a detected obstacle 410 is the target obstacle if the obstacle 410 is detected while the robot cleaner 100 performs the cleaning operation.

The target obstacle may refer to an obstacle that is a target to be moved by the robot cleaner 100.

The processor 150 may identify the detected obstacle as the target obstacle if the detected obstacle is identified as a floor obstacle, is an object capable of being in contact with the robot cleaner 100, and is an object capable of being pushed by the robot cleaner 100 based on the sensing data obtained from the sensor 110.

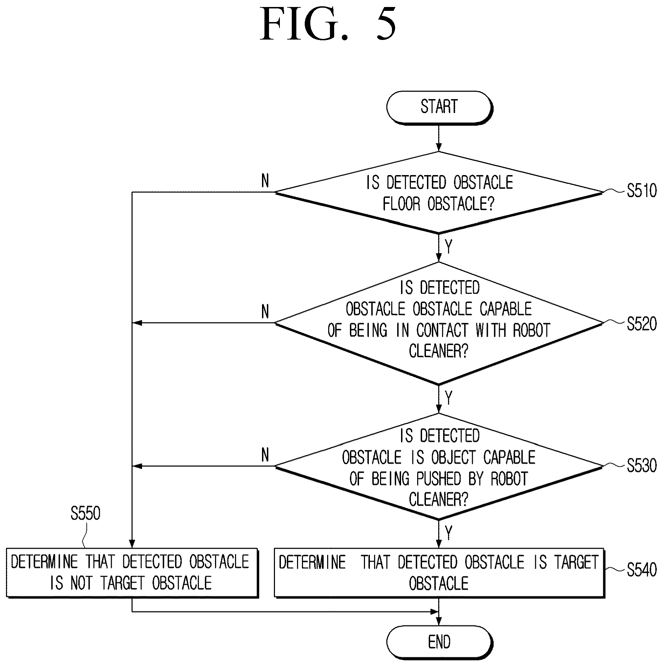

FIG. 5 is a diagram for describing a method for the robot cleaner to identify whether an obstacle is the target obstacle according to an embodiment of the present disclosure.

Referring to FIG. 5, the processor 150 may identify whether the detected obstacle is the floor obstacle (S510).

The floor obstacle may refer to an obstacle located on the floor within the space in which the robot cleaner 100 is disposed, incapable of moving independently, and capable of being moved by a person or the like. For example, walls, furniture, home appliances, or the like that are installed at a fixed location do not correspond to the floor obstacles. Furniture, home appliances, or the like may be moved. However, in general, if installed at a specific location in a home, furniture, home appliances, or the like may be disposed at the same location for a long time, and thus be considered to have the fixed locations. In addition, people, pets, or the like that may move freely are not considered the floor obstacles. However, various other objects may be considered as the floor obstacles.

If the obstacle detected by the robot cleaner 100 is an obstacle present on the map, the detected obstacle is likely to be the obstacle disposed at a fixed location in the space. Therefore, the processor 150 may identify whether the detected obstacle is the obstacle present on the map based on the sensing data obtained from the sensor.

For example, the processor 150 may obtain information about the location, size, shape, or the like of the obstacle based on the location of the robot cleaner 100 in the map and the sensing data obtained from the sensor 110. In addition, the processor 150 may identify whether the obstacle is the obstacle present in the map by comparing the location, size, and shape of the obstacle included in the map with the location, size, and shape of the identified obstacle.

The processor 150 may identify whether the obstacle is the floor obstacle based on a type of the detected obstacle if it is identified that the detected obstacle is an obstacle that is not present on the map.

For example, the processor 150 may obtain the image capturing the obstacle by capturing the image using the camera 115. In addition, the processor 150 may identify (or recognize) the obstacle included in the image by using an object recognition algorithm. For example, the processor 150 may identify the obstacle by extracting a feature from the image and classifying the obstacle by using the feature. In addition, the processor 150 may identify the obstacle included in the image by inputting the image into a neural network model trained to identify the object included in the image. In addition, the memory 140 may store information about the shape and size of each object. The processor 150 may identify the obstacle by obtaining the information about the shape, size, or the like of the obstacle based on the sensing data obtained from the sensor 110, and comparing the obtained information with the information stored in the memory 140.

The processor 150 may identify the obstacle as the floor obstacle if the obstacle is not a predetermined-type obstacle, and may identify the obstacle as not the floor obstacle if the obstacle is the predetermined-type obstacle. The predetermined-type obstacle may include a fixed-type obstacle that is disposed at a fixed location in the space, such as a wall, furniture, or an appliance, and a dynamic-type obstacle that may move independently, such as a person or a pet. Information about which obstacle is the predetermined-type obstacle may be stored in the memory 140. The information stored in the memory 140 may be added, deleted, and changed based on the user input.

Accordingly, the processor 150 may identify whether the detected obstacle is the floor obstacle.

Meanwhile, the processor 150 may identify whether the obstacle is the floor obstacle by using the neural network model. The neural network model may be a neural network model trained to identify whether the object included in the image is the floor obstacle. Accordingly, the processor 150 may input the image capturing the obstacle into the neural network model to thus identify whether the obstacle included in the image is the floor obstacle.

The processor 150 may identify that the detected obstacle is not the target obstacle (S550) if it is identified that the detected obstacle is not the floor obstacle (S510-N). Meanwhile, the processor 150 may identify whether the detected obstacle is an obstacle capable of being in contact with the robot cleaner 100 (S520) if it is identified that the detected obstacle is the floor obstacle (S510-Y).

For example, if the robot cleaner 100 comes into contact with the obstacle made of a sticky material, the obstacle may be attached to the robot cleaner 100, and the operation (e.g., movement or cleaning) of the robot cleaner 100 may be affected due to the attached obstacle. In addition, if the robot cleaner 100 comes into contact with the obstacle, such as sewage, human excrement, or pet excrement, the robot cleaner 100 may fail to normally perform cleaning or malfunction due to sewage, excrement, or the like attached to the robot cleaner 100. Therefore, the fact that the robot cleaner 100 may come into contact with the obstacle may include that the robot cleaner 100 may come into contact with the obstacle and that no problem occurs in performing the operation of the robot cleaner 100 even if the robot cleaner 100 comes into contact with the obstacle.

The processor 150 may identify an attribute of the detected obstacle based on the sensing data obtained from the sensor 110, and identify whether the obstacle is an object capable of being in contact with the robot cleaner 100 based on the attribute of the detected obstacle.

The attribute of the obstacle may include at least one of the material or type of obstacle. For example, the processor 150 may obtain the image capturing the obstacle by capturing the image using the camera 115.

In addition, the processor 150 may obtain information about the material of the obstacle included in the image by inputting the obtained image into a neural network model trained to identify the material of the object included in the image. In addition, the processor 150 may identify the obstacle from the image capturing the obstacle by using the object recognition algorithm. Alternatively, the processor 150 may obtain the information about the shape, size, or the like of the obstacle based on the sensing data obtained from the sensor 110 and identify the obstacle based on the obtained information.

The processor 150 may identify the obstacle as an object incapable of being in contact with the robot cleaner 100 if the obstacle is made of a predetermined material. The predetermined material may include the sticky material. Information about which material is the sticky material may be stored in the memory 140. The information stored in the memory 140 may be added, deleted, and changed based on the user input.

The processor 150 may identify the obstacle as the object incapable of being in contact with the robot cleaner 100 if the obstacle is the predetermined-type obstacle. The predetermined-type obstacle may include a contaminant-type obstacle such as sewage, human excrement, or pet excrement. The information about which obstacle is the predetermined-type obstacle may be stored in the memory 140. The information stored in the memory 140 may be added, deleted, and changed based on the user input.

In this way, the processor 150 may identify the detected obstacle as the object capable of being in contact with the robot cleaner 100 if the detected obstacle is not made of the predetermined material or if the detected obstacle is not the contaminant-type obstacle.

Meanwhile, the processor 150 may identify whether the obstacle is the object capable of being in contact with the robot cleaner 100 by using the neural network model. The neural network model may be a neural network model trained to identify whether the object included in the image is the object capable of being in contact with the robot cleaner 100. Accordingly, the processor 150 may input the image capturing the obstacle into the neural network model to identify whether the obstacle included in the image is the object capable of being in contact with the robot cleaner 100.

The processor 150 may identify that the detected obstacle is not the target obstacle (S550) if it is identified that the detected obstacle is the object incapable of being in contact with the robot cleaner 100 (S520-N). Meanwhile, the processor 150 may identify whether the detected obstacle is the object capable of being pushed by the robot cleaner 100 (S530) if it is identified that the detected obstacle is the object capable of being in contact with the robot cleaner 100 (S520-Y).

For example, a heavy object may not be pushed by the robot cleaner 100. A weight of the object incapable of being pushed by the robot cleaner 100 may be determined by the size, power, or the like of the robot cleaner 100. If the robot cleaner 100 operates in the first mode, the robot cleaner 100 may push away the obstacle. Accordingly, the processor 150 may identify whether the obstacle is the object capable of being moved by being pushed by the robot cleaner 100.

The processor 150 may identify the attribute of the detected obstacle based on the sensing data obtained from the sensor 110, and may identify whether the detected obstacle is the object capable of being pushed by the robot cleaner 100 based on the attribute of the detected obstacle.

The attribute of the obstacle may include a weight of the obstacle. For example, the processor 150 may obtain the image capturing the obstacle by capturing the image using the camera 115. In addition, the processor 150 may obtain information about the weight of the obstacle included in the image by inputting the obtained image into a neural network model trained to identify a weight of the object based on the type, size, or like of the object included in the image. In addition, the processor 150 may detect the obstacle from the obtained image to thus obtain the information about the size, shape, or the like of the obstacle, and obtain the information about the weight of the obstacle based on the information about the size, shape, or the like of the obstacle. For example, the information about the weight of the object based on the size and shape of the object may be stored in the memory 140. The processor 150 may obtain the information about the weight corresponding to the size and shape of the obstacle based on the information stored in the memory 140.

The processor 150 may identify the obstacle as the object incapable of being pushed by the robot cleaner 100 if the weight of the obstacle exceeds a predetermined value, and identify the obstacle as the object incapable of being pushed by the robot cleaner 100 if the weight of the obstacle is less than or equal to the predetermined value. The predetermined value may be experimentally measured based on the weight of the object or the size, power, or the like of the robot cleaner 100. Information about the predetermined value may be stored in the memory 140.

Accordingly, the processor 150 may identify whether the detected obstacle is the object capable of being pushed by the robot cleaner 100.

Meanwhile, the processor 150 may use the neural network model to identify whether the detected obstacle is the object capable of being pushed by the robot cleaner 100. The neural network model may be a neural network model trained to identify the object capable of being pushed by the robot cleaner 100. Accordingly, the processor 150 may input the image capturing the obstacle into the neural network model to identify whether the obstacle included in the image is the object capable of being pushed by the robot cleaner 100.

In addition, the processor 150 may control the driving unit 120 to cause the robot cleaner 100 to move in the direction in which the detected obstacle is disposed to determine whether the robot cleaner 100 is capable of pushing the detected obstacle. The processor 150 may identify whether the location of the obstacle changes based on the movement of the robot cleaner 100 based on the sensing data obtained from the sensor 110. The processor 150 may identify the obstacle as the object capable of being pushed by the robot cleaner 100 if it is identified that the location of the obstacle changes.

The processor 150 may identify that the detected obstacle is not the target obstacle (S550) if it is identified that the detected obstacle is the object incapable of being pushed by the robot cleaner 100 (S530-N). On the other hand, the processor 150 may identify that the detected obstacle is the target obstacle (S540) if it is identified that the detected obstacle is the object capable of being pushed by the robot cleaner 100 (S530-Y).

In this way, the processor 150 may identify whether the obstacle detected by the sensor 110 while the robot cleaner 100 performs the cleaning operation is the target obstacle.

Referring back to FIG. 3, the processor 150 may control the driving unit 120 to cause the robot cleaner 100 to avoid the detected obstacle (S330) if it is identified that the detected obstacle is not the target obstacle (S325-N). In addition, the processor 150 may control the driving unit 120 to cause the robot cleaner 100 to perform the cleaning operation on a region (e.g., an uncleaned region) within the space that has yet to be cleaned based on the map (S315).

The processor 150 may move the obstacle (S335) if it is identified that the detected obstacle is the target obstacle (S325-Y).

Moving the obstacle may include the robot cleaner 100 pushing the obstacle to move the obstacle. A location to which the obstacle is to be moved may be included within the cleaned region (e.g., the cleaned region in FIG. 4A).

The processor 150 may control the driving unit 120 to cause the robot cleaner 100 to push the obstacle to move the obstacle to the cleaned region. For example, the processor 150 may control the driving unit 120 to cause the robot cleaner 100 to move to a location adjacent to the obstacle based on the location of the robot cleaner 100 and the location of the obstacle. If the robot cleaner 100 moves to the location adjacent to the obstacle, the front portion of the robot cleaner 100 may face the obstacle. In addition, the processor 150 may control the driving unit 120 to cause the robot cleaner 100 to move in the direction in which the obstacle is disposed. Accordingly, the obstacle may be pushed to be moved by the robot cleaner 100.

The processor 150 may identify a travel path for moving the obstacle. For example, the processor 150 may identify the travel path for moving the obstacle from a first location to a second location based on the shape of the obstacle and the location of the cleaned region on the map.

The second location may be included in the cleaned region. The travel path may include a travel path for the robot cleaner 100 to move to the location adjacent to the obstacle and a travel path for the robot cleaner 100 to push the obstacle to move the obstacle to the second location.

The processor 150 may identify the shape of the obstacle based on the sensing data obtained from the sensor 110 if it is identified that the obstacle is the target obstacle, and identify a contact portion of the obstacle based on the shape of the obstacle.

The contact portion may be a portion of the obstacle that the robot cleaner 100 comes into contact with to push and move the obstacle.

For example, the processor 150 may identify the contact portion of the obstacle by considering at least one of the shape of the obstacle, the location of the cleaned region, a location of another obstacle, a size of a portion of the obstacle, and a wheel orientation of the obstacle.

For example, the processor 150 may identify a plane on the obstacle based on the shape of the obstacle, and identify the identified plane as the contact portion. For example, the processor 150 may obtain the image by capturing the obstacle from surroundings around the obstacle by using the camera 115. In addition, the processor 150 may analyze the image to identify the plane on the obstacle. In addition, the processor 150 may detect the obstacle from the surroundings around the obstacle by using the LiDAR sensor, the infrared sensor, the ultrasonic sensor, or the like to thus obtain the information about the shape of the obstacle. In addition, the processor 150 may identify the plane on the obstacle based on the obtained information.

For example, the processor 150 may identify the contact portion of the obstacle based on the location of the cleaned region. For example, if the robot cleaner 100 moves to the location adjacent to the obstacle, the processor 150 may identify, as the contact portion, a portion of the obstacle that is disposed in the cleaned region in a forward direction of the robot cleaner 100.

For example, the processor 150 may identify the contact portion of the obstacle based on the location of another obstacle. For example, the processor 150 may identify, as the contact portion, a portion of the obstacle that prevents another obstacle from being present on the travel path if the robot cleaner 100 moves the obstacle to the cleaned region by pushing the obstacle from the location adjacent to the obstacle.

For example, the processor 150 may identify the contact portion of the obstacle based on the size of a portion of the obstacle. For example, the processor 150 may identify, as the contact portion, a portion of the obstacle that has a width greater than or equal to a predetermined value and a height greater than or equal to a predetermined value. The predetermined value may be experimentally measured by considering the size of a portion of the obstacle that the robot cleaner 100 may stably push. Information about the predetermined value may be stored in the memory 140.

For example, the processor 150 may identify the contact portion of the obstacle based on the wheel direction of the obstacle. For example, the processor 150 may obtain the information about the shape of the obstacle based on the sensing data obtained from the sensor 110, and identify whether the obstacle is an obstacle capable of being moved by the wheel based on the shape of the obstacle. In addition, the processor 150 may identify the contact portion of the obstacle based on the wheel direction if it is identified that the obstacle is the obstacle capable of being moved by the wheel. For example, the processor 150 may identify a portion of the obstacle that is disposed in a straight line with the wheel direction of the robot cleaner 100 as the contact portion thereof if the robot cleaner 100 moves to the location adjacent to the obstacle.

The processor 150 may control the driving unit 120 to cause the robot cleaner 100 to move to a location adjacent to the contact portion of the obstacle. In addition, the processor 150 may identify a travel path for moving the obstacle from the first location to the second location based on the location of the contact portion and the location of the cleaned region on the map.

For example, the processor 150 may identify a travel path for the robot cleaner 100 to move from a current location of the robot cleaner 100 to the location adjacent to the contact portion of the obstacle. In addition, the processor 150 may identify a location to which the obstacle is to be moved within the cleaned region, and identify a travel path for the robot cleaner 100 to move from the location adjacent to the obstacle to the identified location.

The location to which the obstacle is to be moved may be any location within the cleaned region. For example, the processor 150 may determine the location to which the obstacle is to be moved within the cleaned region by considering the direction change of the robot cleaner 100, a surrounding obstacle, or the like.

The processor 150 may control the driving unit 120 to cause the robot cleaner 100 to move along the travel path. In addition, the processor 150 may push and move the obstacle based on the sensing data obtained from the sensor 110 while the robot cleaner 100 moves. For example, the processor 150 may identify whether the obstacle is in contact with the robot cleaner 100 based on the pressure value obtained from the pressure sensor 116. In addition, the processor 150 may identify whether the obstacle is being moved based on the location of the obstacle identified on the map. Accordingly, the processor 150 may control the driving unit 120 to cause the robot cleaner 100 to push and move the obstacle to the second location.

For example, referring to FIG. 4B, it may be assumed that the obstacle 410 is the target obstacle. The processor 150 may identify a portion 411 of the obstacle 410 as the contact portion. In addition, the processor 150 may identify a travel path 431 for the robot cleaner 100 to move to a location 421 adjacent to the contact portion 411, and control the driving unit 120 to cause the robot cleaner 100 to move along the travel path 431. According to an embodiment, the processor 150 may control the driving unit 120 to cause the robot cleaner 100 to suction the foreign materials present on the floor by using the cleaning device 160 while the robot cleaner 100 moves.

Referring to FIG. 4C, the processor 150 may identify a location 422 within the region in which cleaning is completed (e.g., the cleaned region), to which the obstacle is to be moved if the robot cleaner 100 moves to the location 421. In addition, the processor 150 may identify a travel path 432 for the robot cleaner 100 to cause the robot cleaner 100 to move the obstacle to the location 422, and control the driving unit 120 to cause the robot cleaner 100 to move along the travel path 432. In an embodiment, the processor 150 may control the driving unit 120 to cause the robot cleaner 100 to suction the foreign materials present on the floor by using the cleaning device 160 while the robot cleaner 100 moves.

Accordingly, as shown in FIG. 4D, the robot cleaner 100 may push and move the obstacle 410 to the cleaned region.

The processor 150 may control the driving unit 120 to cause the robot cleaner 100 to perform the cleaning operation on the first location after moving the obstacle to the second location along the travel path. That is, the processor 150 may control the driving unit 120 to cause the robot cleaner 100 to perform the cleaning operation on the region in which the obstacle used to be disposed after moving the obstacle to the cleaned region (S340). The region in which the obstacle used to be disposed may include the first location. In addition, region in which the obstacle used to be disposed may include the first location and surrounding regions of the first location. For example, the processor 150 may control the driving unit 120 to cause the robot cleaner 100 to move the region in which the obstacle used to be disposed based on the map, and to suction the foreign materials present on the floor by using the cleaning device 160 while the robot cleaner 100 moves.

The processor 150 may control the driving unit 120 to cause the robot cleaner 100 to move the obstacle from the second location to the first location if the cleaning operation on the first location is completed. That is, the processor 150 may control the driving unit 120 to cause the robot cleaner 100 to move the obstacle to an original location if the cleaning operation on the region in which the obstacle used to be disposed is completed (S345).

For example, the processor 150 may identify the shape of the obstacle based on the sensing data obtained from the sensor 110, and identify the contact portion of the obstacle based on the shape of the obstacle. In addition, the processor 150 may control the driving unit 120 to cause the robot cleaner 100 to move to the location adjacent to the contact portion of the obstacle.

The processor 150 may identify a travel path for moving the obstacle from the second location to the first location based on the location of the contact portion and the first location on the map. In addition, the processor 150 may control the driving unit 120 to cause the robot cleaner 100 to move along the travel path. Accordingly, the obstacle may be pushed by the robot cleaner 100 and moved to the first location.

Meanwhile, a case where the robot cleaner 100 moves the obstacle from the second location to the first location and a case where the robot cleaner 100 moves the obstacle from the first location to the second location differ only in departure and arrival points and use the same method for identifying the contact portion and the travel path. Accordingly, a specific description of the method for identifying the contact portion and the travel path for the case where the robot cleaner 100 moves the obstacle from the second location to the first location may be omitted.

For example, referring to FIG. 4E, the processor 150 may identify a portion 413 of the obstacle 410 as the contact portion. In addition, the processor 150 may identify a travel path 433 for the robot cleaner 100 to move to a location 423 adjacent to the contact portion 413, and control the driving unit 120 to cause the robot cleaner 100 to move along the travel path 433. According to an embodiment, the processor 150 may control the driving unit 120 to cause the robot cleaner 100 to suction the foreign materials present on the floor by using the cleaning device 160 while the robot cleaner 100 moves.

Referring to FIG. 4F, a location 424 at which the obstacle is originally used to be located may be cleaned by the robot cleaner 100 (e.g., a cleaned region 10). The processor 150 may identify a travel path 434 for the robot cleaner 100 to cause the robot cleaner 100 to move the obstacle back to the location 424 where the obstacle is originally located, and control the driving unit 120 to cause the robot cleaner 100 to move along the travel path 434. According to an embodiment, the processor 150 may control the driving unit 120 to cause the robot cleaner 100 to suction the foreign materials present on the floor by using the cleaning device 160 while the robot cleaner 100 moves.

Accordingly, as shown in FIG. 4G, the robot cleaner 100 may push and move the obstacle 410 to the original location.

The processor 150 may control the driving unit 120 to cause the robot cleaner 100 to perform the cleaning operation if the obstacle is moved to the original location (S350). For example, the processor 150 may control the driving unit 120 to cause the robot cleaner 100 to perform the cleaning operation on the region within the space that has yet to be cleaned based on the map.

The processor 150 may identify whether an entire region on the map is completely cleaned (S355), and control the driving unit 120 to cause the robot cleaner 100 to stop the cleaning operation and return to a charging station based on the map (S360) if it is identified that the entire region on the map is cleaned (S355-Y). Information about a location of the charging station may be stored in the map. Meanwhile, the processor 150 may perform the above-described operation if it is identified that the entire region on the map is not completely cleaned (S355-N) and the obstacle is detected (S320-Y).

Meanwhile, in the above-described example, the robot cleaner 100 is described as moving the obstacle to the original location, which is only an example. The robot cleaner 100 may move or may not move the obstacle to the original location depending on the type of the obstacle.

For example, if the obstacle is a first-type obstacle, the processor 150 may control the driving unit 120 to cause the robot cleaner 100 to move the obstacle moved to the second location back to the first location. If the obstacle is a second-type obstacle, the processor 150 may control the driving unit 120 to cause the robot cleaner 100 to leave the obstacle moved to the second location as it is and perform the cleaning operation on another region (e.g., the uncleaned region). Information about which obstacle is the first-type or second-type obstacle may be stored in the memory 140. The information stored in the memory 140 may be added, deleted, and changed based on the user input.

According to the present disclosure, if the mode of the robot cleaner 100 is set to the first mode, the robot cleaner 100 may identify the target obstacle from the obstacles disposed in the space and perform the cleaning operation by pushing away the identified obstacle. The robot cleaner 100 may identify, as the target obstacle, the obstacle capable of being pushed and moved by the robot cleaner 100 and that does not generate a problem in performing the operation of the robot cleaner 100 even if the robot cleaner 100 is in contact with the obstacle. In addition, the robot cleaner 100 may establish an appropriate traveling plan for pushing and moving the obstacle, and push and move the obstacle based on the traveling plan. Accordingly, the robot cleaner 100 may more stably push away the obstacle and perform the cleaning operation.

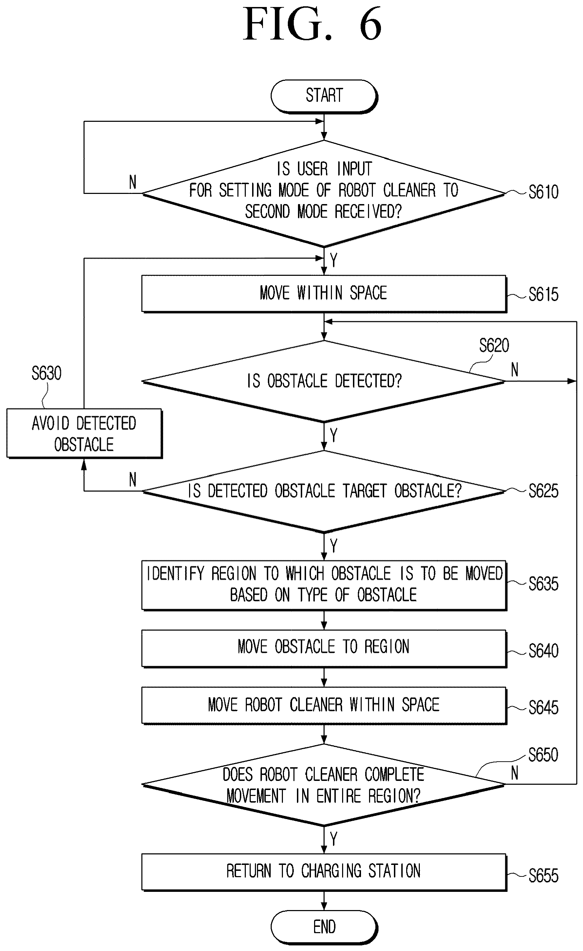

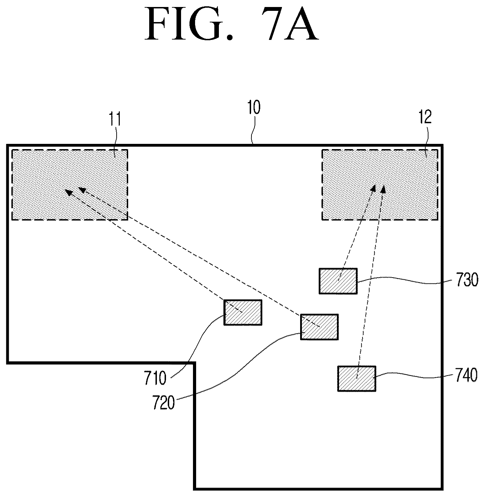

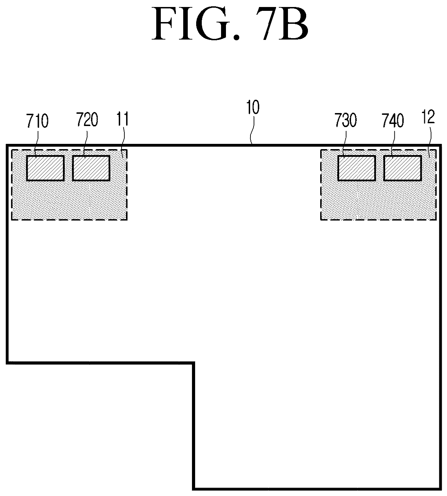

FIG. 6, FIG. 7A, and FIG. 7B are diagrams for describing the operations of the robot cleaner in the second mode according to an embodiment of the present disclosure.

Referring to FIG. 6, the processor 150 may control the driving unit 120 to cause the robot cleaner 100 to move (S615) if a user input for setting the mode of the robot cleaner 100 to the second mode is received through the input interface 130 (S610).

The second mode may refer to a mode (e.g., a tidying up mode) in which the robot cleaner 100 moves the obstacle within the space to a specific region. For example, the processor 150 may control the driving unit 120 to cause the robot cleaner 100 to move within the space based on the map if the processor 150 receives the user input for setting the mode of the robot cleaner 100 to the second mode.

The processor 150 may detect the obstacle based on the sensing data obtained from the sensor 110 while the robot cleaner 100 moves (S620). For example, the processor 150 may detect the obstacle in the surroundings around the robot cleaner 100 based on the sensing data obtained from at least one of the LiDAR sensor 112, the infrared sensor 113, or the ultrasonic sensor 114. In addition, the processor 150 may detect the obstacle in the surroundings around the robot cleaner 100 by obtaining the image by capturing the surroundings around the robot cleaner 100 using the camera 115, and by analyzing the image.

The processor 150 may identify whether the detected obstacle is the target obstacle (S625) if the obstacle is detected (S620-Y). The method for identifying whether the detected obstacle is the target obstacle is the same as in the first mode, and a detailed description thereof is thus omitted.

Meanwhile, in the above-described example, the processor 150 is described as detecting the obstacle based on the sensing data obtained from the sensor 110 while the robot cleaner 100 moves, and identifying whether the detected obstacle is the target obstacle. However, the present disclosure is not limited to this example. For example, the processor 150 may store information about a location of the identified target obstacle while the robot cleaner 100 operates in the first mode in the memory 140. In addition, the processor 150 may identify the location of the target obstacle on the map based on the information stored in the memory 140.

The processor 150 may control the driving unit 120 to cause the robot cleaner 100 to avoid the obstacle (S630) if it is identified that the detected obstacle is not the target obstacle (S625-N). In addition, the processor 150 may control the driving unit 120 to cause the robot cleaner 100 to move within the space based on the map.

The processor 150 may identify a region to which the obstacle is to be moved based on the type of the obstacle (S635) if it is identified that the detected obstacle is the target obstacle (S625-Y).

The processor 150 may identify a region corresponding to the obstacle from a plurality of regions included in the map based on the type of the obstacle. For example, the processor 150 may identify the obstacle in the image capturing the obstacle by using the object recognition algorithm, or obtain the information about the shape, size, or the like of the obstacle based on the sensing data obtained from the sensor 110, and identify the obstacle based on the obtained information. Meanwhile, information about the region corresponding to the obstacle based on the type of the obstacle may be stored in the memory 140. The information stored in the memory 140 may be added, deleted, and changed based on the user input. The processor 140 may identify a region corresponding to the type of the obstacle from the plurality of regions present on the map based on the information stored in the memory 140.

The processor 150 may control the driving unit 120 to cause the robot cleaner 100 to move the obstacle to the region based on a location of the region (S640).

Moving the obstacle may include the robot cleaner 100 pushing and moving the obstacle.

For example, the processor 150 may identify the shape of the obstacle based on the sensing data obtained from the sensor 110, and identify the contact portion of the obstacle based on the shape of the obstacle. In addition, the processor 150 may control the driving unit 120 to cause the robot cleaner 100 to move to the location adjacent to the contact portion of the obstacle.

The processor 150 may identify a travel path for moving the obstacle to a region based on the location of the contact portion and a location of the region to which the obstacle is to be moved. In addition, the processor 150 may control the driving unit 120 to cause the robot cleaner 100 to move along the travel path. Accordingly, the obstacle may be pushed and moved to the region by the robot cleaner 100.

Meanwhile, the method for the robot cleaner 100 to move the obstacle to the region is the same as the method for the robot cleaner 100 to move the obstacle in the first mode, except for different departure and arrival points. Accordingly, a specific description of the method for identifying the contact portion and the travel path for a case where the robot cleaner 100 moves the obstacle to the region may be omitted.

The processor 150 may control the driving unit 120 to cause the robot cleaner 100 to move within the space if the obstacle is moved (S645). For example, the processor 150 may control the driving unit 120 to cause the robot cleaner 100 to move to a region within the space in which the robot cleaner 100 is yet to move based on the map.

The processor 150 may identify whether the robot cleaner 100 completes the movement in the entire region on the map (S650), and control the driving unit 120 to cause the robot cleaner 100 to return to the charging station based on the map (S655) if it is identified that the robot cleaner 100 completes the movement in the entire region on the map (S650-Y). Meanwhile, the processor 150 may perform the above-described operation if it is identified that the processor 150 has yet to move in the entire region on the map (S650-N) and the obstacle is detected (S320-Y). Accordingly, all the target obstacles present in the space may be moved to the region corresponding to each target obstacle by the robot cleaner 100.

For example, referring to FIG. 7A, among obstacles 710, 720, 730, and 740 identified as the target obstacles, it may be assumed that the obstacles 710 and 720 are toys and the obstacles 730 and740 are clothing. In addition, among the plurality of regions 11 and 12 on the map 10, it may be assumed that a region corresponding to the toy is a first region 11 and a region corresponding to clothing is a second region 12.

The processor 150 may control the driving unit 120 to cause the robot cleaner 100 to push and move the obstacles 710 and 720 to the first region 11, and control the driving unit 120 to cause the robot cleaner 100 to push and move the obstacles 730 and 740 to the second region 12.

Accordingly, as shown in FIG. 7B, the obstacles 710 and 720 may be moved to the first region 11, and the obstacles 730 and 740 may be moved to the second region 12.

According to the present disclosure, if the mode of the robot cleaner 100 is set to the second mode, the robot cleaner 100 may move the obstacle in the space to the specific region based on the type of the obstacle. If the robot cleaner 100 operates in the first mode or the second mode based on the user input, not only is cleaning of the space completed, but the obstacle in the space may be moved based on the type to a location desired by the user. In this way, user convenience may be improved because the objects in the space are organized into regions desired by the user.

Meanwhile, the processor 150 may control the driving unit 120 to cause the robot cleaner 100 to perform the cleaning operation based on the user input if the robot cleaner 100 operates in the second mode. The user input may be received after the obstacle is moved to the region. Moving the obstacle to the region may refer to moving all the obstacles identified as the target obstacles in the space to the regions corresponding to the respective obstacles.

The user input for the cleaning operation may include a user input for cleaning the entire region within the space and the user input for cleaning the region in which the obstacle used to be disposed.

The processor 150 may control the driving unit 120 to cause the robot cleaner 100 to perform the cleaning operation on the entire region on the map based on the map if the user input for cleaning the entire region is received through the input interface 130 after the obstacle is moved to the region. For example, the processor 150 may control the driving unit 120 to cause the robot cleaner 100 to move in the entire region on the map, and control the driving unit 120 to cause the robot cleaner 100 to suction the foreign materials present on the floor by using the cleaning device 160 while the robot cleaner 100 moves.

The processor 150 may control the driving unit 120 to cause the robot cleaner 100 to perform the cleaning operation on the region in which the obstacle used to be disposed based on the map if the user input for cleaning the region in which the obstacle used to be disposed is received through the input interface 130 after the obstacle is moved to the region. For example, the processor 150 may identify a location on the map at which the obstacle used to be disposed, the obstacle being moved to the region, and control the driving unit 120 to cause the robot cleaner 100 to move to the identified location. In addition, the processor 150 may control the driving unit 120 to cause the robot cleaner 100 to suction the foreign materials present on a floor of the region in which the obstacle used to be disposed by using the cleaning device 160.

According to the present disclosure, if the robot cleaner 100 operates in the second mode, the robot cleaner 100 may perform the cleaning operation on the entire region or only on the region in which the obstacle used to be disposed, based on the user input. Accordingly, the space may be more completely cleaned. In addition, even if the robot cleaner 100 operates only in the second mode instead of operating in the first mode, not only may the space be completely cleaned, but also the obstacle in the space may be moved to the location desired by the user based on the type. Accordingly, the user convenience may be improved.

Meanwhile, in the above-described example, the robot cleaner 100 is described as pushing and moving the obstacle, and is not limited to this example. For example, the driving unit 120 may include a robot joint (e.g., an articulation or a joint). The robot joint may refer to a component for replacing the function of a human arm or hand. The processor 150 may control the driving unit 120 cause the robot cleaner 100 to grasp the obstacle in the space by using the robot joint and to move while grasping the obstacle. Accordingly, the location of the obstacle may be moved.

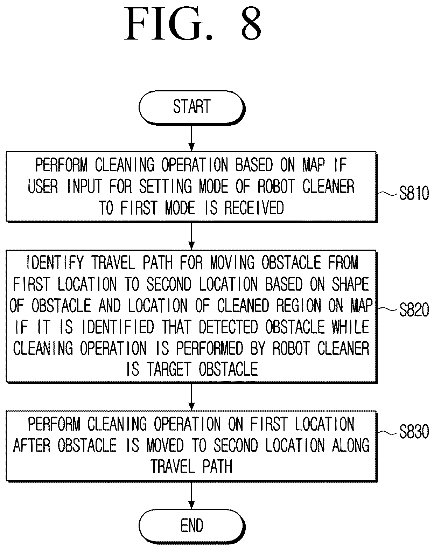

FIG. 8 is a flowchart describing a cleaning method for a robot cleaner according to an embodiment of the present disclosure.

The method may include performing the cleaning operation based on the map if the user input for setting the mode of the robot cleaner to the first mode is received (S810).

The method may include identifying the travel path for moving the obstacle from the first location to the second location based on the shape of the obstacle and the location of the cleaned region on the map if it is identified that the obstacle detected by the sensor while the cleaning operation is performed by the robot cleaner is the target obstacle (S820).

The method may include performing the cleaning operation on the first location after the obstacle is moved to the second location along the travel path (S830).

The cleaning method according to the present disclosure may include identifying the detected obstacle as the target obstacle based on the sensing data obtained from the sensor, if it is identified that the detected obstacle is the floor obstacle, is the object capable of being in contact with the robot cleaner, and is the object capable of being pushed by the robot cleaner.

In this case, the method may include identifying whether the detected obstacle is the obstacle present on the map based on the sensing data obtained from the sensor, and identify whether the detected obstacle is the floor obstacle based on the type of the detected obstacle if it is identified that the detected obstacle is the obstacle that is not present on the map.

In addition, the method may include identifying the attribute of the detected obstacle based on the sensing data obtained from the sensor, and identifying whether the detected obstacle is the object capable of being in contact with the robot cleaner and is the object capable of being pushed by the robot cleaner based on the identified attribute.

Step S820 may include identifying the shape of the obstacle based on the sensing data obtained from the sensor if it is identified that the obstacle is the target obstacle, identifying the contact portion of the obstacle based on the shape of the obstacle, and identifying the travel path for moving the obstacle from the first location to the second location based on the location of the contact portion and the location of the cleaned region on the map. The contact portion may be a portion of the obstacle that the robot cleaner comes into contact with to push and move the obstacle.

In this case, the plane on the obstacle may be identified based on the shape of the obstacle, and the plane may be identified as the contact portion.

The cleaning method according to the present disclosure may include moving the obstacle from the second location to the first location if the cleaning operation on the first location is completed.

In addition, the cleaning method according to the present disclosure may include moving within the space based on the map if the user input for setting the mode of the robot cleaner to the second mode is received, identifying the region corresponding to the obstacle from the plurality of regions included in the map based on the type of the obstacle if the detected obstacle is identified as the target obstacle by the sensor while the robot cleaner moves, and moving the obstacle to the region based on the location of the region.

In addition, the cleaning method according to the present disclosure may include performing the cleaning operation after the obstacle is moved to the region and the user input for the cleaning operation is received.

In this case, the method may include performing the cleaning operation on the entire region on the map based on the map if the user input for cleaning the entire region is received after the obstacle is moved to the region, and performing the cleaning operation on the region in which the obstacle used to be disposed based on the map if the user input for cleaning the region in which the obstacle used to be disposed is received after the obstacle is moved to the region.

Meanwhile, according to an embodiment of the present disclosure, the various embodiments described above may be implemented in software including an instruction stored on a machine-readable storage medium (for example, a computer-readable storage medium). A machine may be a device that invokes the stored instruction from a storage medium, may be operated based on the invoked instruction, and may include an electronic device (e.g., electronic device A) according to the disclosed embodiments. If the instruction is executed by the processor, the processor may directly perform a function corresponding to the instruction or other components may perform the function corresponding to the instruction under control of the processor. The instruction may include codes provided or executed by a compiler or an interpreter. The machine-readable storage medium may be provided in the form of a non-transitory storage medium. Here, the term "non-transitory" indicates that the storage medium is tangible without including a signal, and does not distinguish whether data are semi-permanently or temporarily stored on the storage medium.

In addition, according to an embodiment, the methods according to the various embodiments described above may be included and provided in a computer program product. The computer program product may be traded as a commodity between a seller and a purchaser. The computer program product may be distributed in a form of the machine-readable storage medium (for example, a compact disc read only memory (CD-ROM)), or may be distributed online through an application store (for example, PlayStore^{™}. In case of the online distribution, at least a part of the computer program product may be at least temporarily stored or temporarily provided on a storage medium such as the memory of a manufacturer server, an application store server, or a relay server.

In addition, according to an embodiment of the present disclosure, the various embodiments described above may be implemented in a computer-readable recording medium or a device similar thereto that uses software, hardware, or a combination of software and hardware. In some cases, the embodiments described in the specification may be implemented by a processor itself. According to software implementation, the embodiments such as the procedures and functions described in the specification may be implemented by separate software modules. Each software module may perform at least one function or operation described in the specification.

Meanwhile, computer instructions for performing processing operations of the device according to the various embodiment of the present disclosure described above may be stored in a non-transitory computer-readable recording medium. The computer instructions stored in the non-transitory computer-readable recording medium may allow a specific device to perform the processing operations of the device according to the various embodiments described above in case that the computer instructions are executed by a processor of the specific device. The non-transitory computer-readable recording medium is not a medium that temporarily stores data, such as a register, a cache, or a memory, and indicates a medium that semi-permanently stores data and is readable by the device. A specific example of the non-transitory computer-readable recording medium may include a compact disk (CD), a digital versatile disk (DVD), a hard disk, a Blu-ray disk, a universal serial bus (USB), a memory card, a read-only memory (ROM), or the like.

In addition, each of the components (for example, modules or programs) according to the various embodiments described above may include a single entity or a plurality of entities, and some of the corresponding subcomponents described above may be omitted or other subcomponents may be further included in the various embodiments. Alternatively or additionally, some of the components (e.g., modules or programs) may be integrated into one entity, and may perform functions performed by the respective corresponding components before being integrated in the same or similar manner. Operations performed by the modules, the programs or other components according to the various embodiments may be executed in a sequential manner, a parallel manner, an iterative manner or a heuristic manner, and at least some of the operations may be performed in a different order, omitted, or supplemented with other operations.

Although the embodiments of the present disclosure have been shown and described hereinabove, the present disclosure is not limited to the above-mentioned specific embodiments, and may be variously modified by those skilled in the art to which the present disclosure pertains without departing from the scope and spirit of the present disclosure as disclosed in the accompanying claims. These modifications should also be understood to fall within the scope and spirit of the present disclosure.

## Claims

1. A robot cleaner comprising:
a sensor;
a driving unit;
an input interface;
a memory storing a map of a space in which the robot cleaner is disposed; and
at least one processor configured to
control the driving unit to cause the robot cleaner to perform a cleaning operation based on the map if a user input for setting a mode of the robot cleaner to a first mode is received through the input interface,
identify a travel path for moving an obstacle from a first location to a second location based on a shape of the obstacle and a location of a cleaned region on the map if it is identified that the obstacle detected by the sensor while the robot cleaner performs the cleaning operation is a target obstacle, and
control the driving unit to cause the robot cleaner to perform the cleaning operation on the first location after moving the obstacle to the second location along the travel path.

2. The robot cleaner as claimed in claim 1, wherein the at least one processor is configured to identify the detected obstacle as the target obstacle if it is identified that the detected obstacle is a floor obstacle, is an object capable of being in contact with the robot cleaner, and is an object capable of being pushed by the robot cleaner based on sensing data obtained from the sensor.

3. The robot cleaner as claimed in claim 2, wherein the at least one processor is configured to
identify whether the detected obstacle is an obstacle present on the map based on the sensing data obtained from the sensor, and
identify whether the detected obstacle is the floor obstacle based on a type of the detected obstacle if it is identified that the detected obstacle is an obstacle that is not present on the map.

4. The robot cleaner as claimed in claim 2, wherein the at least one processor is configured to
identify an attribute of the detected obstacle based on the sensing data obtained from the sensor, and
identify whether the detected obstacle is the object capable of being in contact with the robot cleaner and is the object capable of being pushed by the robot cleaner based on the identified attribute.

5. The robot cleaner as claimed in claim 1, wherein the at least one processor is configured to
identify the shape of the obstacle based on the sensing data obtained from the sensor if it is identified that the obstacle is the target obstacle,
identify a contact portion of the obstacle based on the shape of the obstacle, and
identify the travel path for moving the obstacle from the first location to the second location based on a location of the contact portion and the location of the cleaned region on the map,
the contact portion being a portion of the obstacle that the robot cleaner comes into contact with to push and move the obstacle.

6. The robot cleaner as claimed in claim 5, wherein the at least one processor is configured to
identify a plane on the obstacle based on the shape of the obstacle, and
identify the plane as the contact portion.

7. The robot cleaner as claimed in claim 1, wherein the at least one processor is configured to control the driving unit to cause the robot cleaner to move the obstacle from the second location to the first location if the cleaning operation on the first location is completed.

8. The robot cleaner as claimed in claim 1, wherein the at least one processor is configured to
control the driving unit to cause the robot cleaner to move within the space based on the map if a user input for setting the mode of the robot cleaner to a second mode is received through the input interface,
identify a region corresponding to the obstacle from a plurality of regions included in the map based on a type of the obstacle if it is identified that the obstacle detected by the sensor while the robot cleaner moves is the target obstacle, and
control the driving unit to cause the robot cleaner to move the obstacle to the region based on a location of the region.

9. The robot cleaner as claimed in claim 8, wherein the at least one processor is configured to control the driving unit to cause the robot cleaner to perform the cleaning operation if a user input for the cleaning operation is received through the input interface after the obstacle is moved to the region.

10. The robot cleaner as claimed in claim 9, wherein the at least one processor is configured to
control the driving unit to cause the robot cleaner to perform the cleaning operation on an entire region on the map based on the map if a user input for cleaning the entire region is received through the input interface after the obstacle is moved to the region, and
control the driving unit to cause the robot cleaner to perform the cleaning operation on a region in which the obstacle used to be disposed based on the map if a user input for cleaning the region in which the obstacle used to be disposed is received after the obstacle is moved to the region.

11. A cleaning method for a robot cleaner which includes a sensor, the method comprising:
performing a cleaning operation based on a map if a user input for setting a mode of the robot cleaner to a first mode is received;
identifying a travel path for moving an obstacle from a first location to a second location based on a shape of the obstacle and a location of a cleaned region on the map if it is identified that the obstacle detected by the sensor while the cleaning operation is performed by the robot cleaner is a target obstacle; and
performing the cleaning operation on the first location after the obstacle is moved to the second location along the travel path.

12. The method as claimed in claim 11, further comprising identifying the detected obstacle as the target obstacle if it is identified that the detected obstacle is a floor obstacle, is an object capable of being in contact with the robot cleaner, and is an object capable of being pushed by the robot cleaner based on sensing data obtained from the sensor.

13. The method as claimed in claim 12, wherein the identifying of the detected obstacle as the target obstacle includes
identifying whether the detected obstacle is an obstacle present on the map based on the sensing data obtained from the sensor, and
identifying whether the detected obstacle is the floor obstacle based on a type of the detected obstacle if it is identified that the detected obstacle is an obstacle that is not present on the map.

14. The method as claimed in claim 12, wherein the identifying of the detected obstacle as the target obstacle includes
identifying an attribute of the detected obstacle based on the sensing data obtained from the sensor, and
identifying whether the detected obstacle is the object capable of being in contact with the robot cleaner and is the object capable of being pushed by the robot cleaner based on the identified attribute.

15. The method as claimed in claim 11, wherein the identifying of the travel path includes
identifying the shape of the obstacle based on the sensing data obtained from the sensor if it is identified that the obstacle is the target obstacle,
identifying a contact portion of the obstacle based on the shape of the obstacle, and
identifying the travel path for moving the obstacle from the first location to the second location based on a location of the contact portion and the location of the cleaned region on the map,
the contact portion being a portion of the obstacle that the robot cleaner comes into contact with to push and move the obstacle.
